Europäisches Patentamt

European Patent Office

Office européen des brevets

(19)

(11) EP 0 999 546 A1

(12) **EUROPEAN PATENT APPLICATION**

(43) Date of publication:
**10.05.2000 Bulletin 2000/19**

(51) Int Cl.$^7$: **G11B 19/20**, G11B 17/028

(21) Application number: **99307870.8**

(22) Date of filing: **06.10.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **08.10.1998 KR 9842032**<br><br>(71) Applicant: **SAMSUNG ELECTRONICS CO., LTD.**<br>**Suwon-City, Kyungki-do (KR)** | (72) Inventors:<br>• **Lee, Sung-jin**<br>  **Gwangmyung-city, Kyungki-do (KR)**<br>• **Hong, Soon-kyo**<br>  **Seoul (KR)**<br><br>(74) Representative: **Chugg, David John et al**<br>**Appleyard Lees,**<br>**15 Clare Road**<br>**Halifax, West Yorkshire HX1 2HY (GB)** |

(54) **Dynamic vibration absorber and hard disk drive employing the same**

(57)     A dynamic vibration absorber of a rotating body and a hard disk drive employing the same are disclosed. The dynamic vibration absorber of a rotating body for absorbing vibrations generated when the rotating body rotates, is characterized in that the dynamic vibration absorber includes: a rotating body (20); at least one mass body (30) disposed at peripheral part of the rotating body (20); and a connecting means (40) for connecting the mass body (30) to the rotating body (20) so that the mass body (30) can elastically move in a radial direction of the rotating body (20).

FIG. 2B

EP 0 999 546 A1

**Description**

The present invention relates to a dynamic vibration absorber of a rotating body for absorbing vibrations generated when the rotating body rotates and a hard disk drive employing the same.

In general, a rotating body such as a HDD (hard disk drive), DVD (digital versatile disk) drive, CD-ROM drive, motor or pulley installed in a machine tool has a unique natural frequency depending on the material and mechanical characteristics of the device. Since severe vibration can be developed as the amplitude of the vibration becomes amplified when the rotating body is vibrated by a vibrating source such as its engine or wind, a vibration absorber is required to absorb such vibration.

Figure 1 is a sectional view of a gyroscope including a dynamic absorber disclosed in U.S. Patent No. 4,596,158.

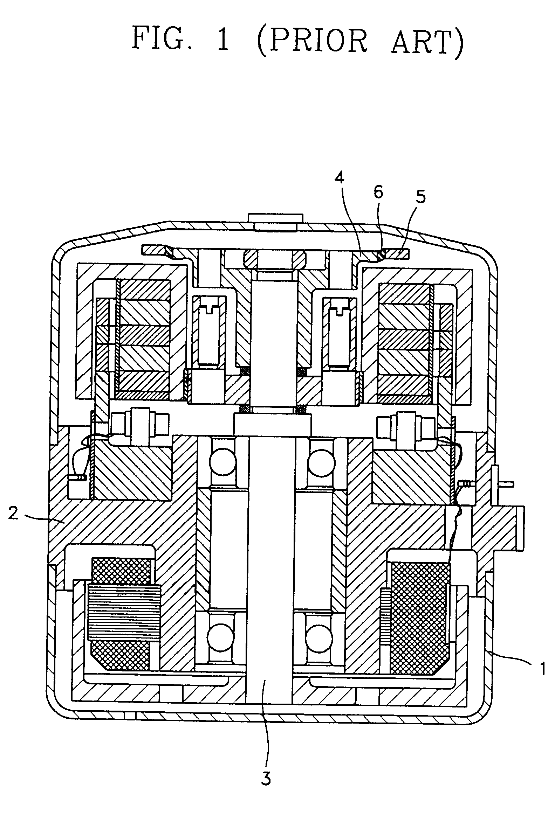

Referring to Figure 1, the gyroscope includes a stator 2 installed in a casing 1, a rotor 4 supported on a rotating shaft 3 rotatably installed in the stator 2, and a dynamic absorber for absorbing vibrations generated when the rotor 4 rotates.

The dynamic absorber includes an annular ring 5 for receiving the vibrations generated in the rotating rotor 4, an elastomeric ring 6 for joining the ring 5 to the rotor 4. The mass and strength of the ring 5 are designed to have the same resonant frequency as that of the rotor 4, and the ring 5 absorbs vibrations by offsetting the resonant frequency generated in the rotor 4 rotating at a predetermined speed.

However, the conventional dynamic absorber having the structure described above, since irregular mass distributions of the rotor 4 and the ring 5 due to machining errors influence the rotation of the rotor 4, the vibration absorbing effect is reduced. In addition, since it is difficult to estimate the strength of the ring 5 precisely due to the influence of the elastomeric ring 6 interposed between the ring 5 and the rotor 4, the resonant frequency of the ring 5 is difficult to determine. Further, since the ring 5 and the elastomeric ring 6 are designed to offset only the resonant frequency of the rotor 4, whirling vibration in which the center of rotation of the rotor 4 oscillates due to the frequency of vibrations generated when the rotor 4 rotates is difficult to control.

With a view to solve or reduce the above problems, it is an aim of embodiments of the present invention to provide a dynamic vibration absorber of a rotating body whose structure is improved so that vibrations generated when the rotating body rotates at high speed can be effectively absorbed without reference to an irregular mass distribution of the rotating body, and a hard disk drive employing the same.

Accordingly, to achieve the above aim, there is provided a dynamic vibration absorber of a rotating body for absorbing vibrations generated when the rotating body rotates, characterized in that the dynamic vibration absorber includes: a rotating body; at least one mass body disposed at peripheral part of the rotating body; and a connecting means for connecting the mass body to the rotating body so that the mass body can elastically move in a radial direction of the rotating body.

Here, it is preferable that the rotating body includes at least one recessed portion formed to be recessed with respect to the circumferential surface of the rotating body so that the mass body can be received therein; and the connecting means includes an elastic member installed in the recessed portion so as to support the mass body received in the recessed portion.

In addition, it is preferable that the mass bodies are disposed to be symmetrical with respect to the rotation axis of the rotating body, and positioned in the corresponding recessed portions at regular intervals in the circumferential direction, and the mass body includes a pair of pieces symmetrically assembled to the elastic member.

In addition, it is preferable that the rotating body includes a main body, a cover assembled to the main body, and at least one recessed portion formed to be recessed with respect to the circumferential surfaces of the main body and the cover to receive the mass body; and the connecting means includes an elastic ring interposed between the main body and the cover and supporting the mass body so that the mass body can elastically move in the recessed portion.

In addition, it is preferable that the rotating body includes a main body, a cover assembled to the main body, and at least one receiving portion formed between the main body and the cover so that the mass body can be movably received in the receiving portion; and the connecting means includes a spring supporting the mass body so that the mass body can elastically move in the receiving portion.

Further, the receiving portion may be opened through the circumferential surface of the rotating body so the mass body can move in a radial direction of the rotating body.

In addition, it is preferable that the rotating body includes at least one recessed portion formed to be recessed with respect to an outer side of the rotating body to receive the mass body; and the connecting means includes a beam whose ends are fixed to outer sides of the rotating body and which is elastically deformable and supports the mass body, and further includes a fixing means for fixing the beam to outer sides of the rotating body.

In addition, it is preferable that the connecting means includes locking holes formed at ribs radially installed in the rotating body; and elastic pins fixed to the locking holes so as to elastically support the mass body.

In another aspect of the invention, there is provided a hard disk drive including a base; a spindle motor installed on the base; a plurality of hard disks supported on a rotor rotatably installed on the shaft of the spindle motor; spacers interposed between the hard disks; and a clamper assembled to the rotor so as to clamp the hard disks, characterized in that the hard disk drive includes: a dynamic vibration absorber for absorbing rotational vibrations generated when the hard disks rotate while elastically moving in a radial direction of the hard disks.

The dynamic vibration absorber is preferably of a type in accordance with the first mentioned aspect.

Here, it is preferable that the dynamic vibration absorber includes: at least one mass body installed in the spacer and/or the clamper; and a connecting means for connecting the mass body to the spacer and/or the clamper so that the mass body can elastically move in a radial direction of the spacer and/or the clamper.

In addition, it is preferable that the spacer and/or the clamper includes at least one recessed portion formed to be recessed with respect to an outer side of the clamper and/or spacer to receive the mass body; and the connecting means includes an elastic member installed in the recessed portion so as to elastically support the mass body.

In addition, it is preferable that the spacer and/or the clamper includes a main body and a cover assembled to the main body; and the elastic member is an annular elastic ring interposed between the main body and the cover.

In addition, it is preferable that the spacer and/or the clamper includes at least one receiving hole in which the mass body is movably received; and the connecting means includes an elastic member installed in the receiving hole so as to elastically support the mass body.

In addition, it is preferable that the spacer and/or the clamper includes a main body, a cover assembled to the main body, and at least one receiving hole formed through the main body and the cover for receiving the mass body; and the connecting means includes an annular elastic ring interposed between the main body and the cover so as to elastically support the mass body.

For a better understanding of the invention, and to show how embodiments of the same may be carried into effect, reference will now be made, by way of example, to the accompanying diagrammatic drawings in which:

Figure 1 is a sectional view illustrating a conventional dynamic absorber of a rotating body;

Figure 2A is a sectional view illustrating a dynamic vibration absorber of a rotating body according to a first embodiment of the present invention;

Figure 2B is a plan view of the dynamic vibration absorber of Figure 2A;

Figure 3 is a schematic diagram illustrating a dynamical system of two degrees of freedom for describing the operation of the dynamic vibration absorber of a rotating body according to the first embodiment of the present invention;

Figure 4A is a partially exploded sectional view schematically illustrating a dynamic vibration absorber of a rotating body according to a second embodiment of the present invention;

Figure 4B is a plan view of the main body portion shown in Figure 4A;

Figure 5A is a partially exploded sectional view schematically illustrating a dynamic vibration absorber of a rotating body according to a third embodiment of the present invention;

Figure 5B is a plan view of the main body portion shown in Figure 5A;

Figure 6A is a schematic plan view illustrating a dynamic vibration absorber of a rotating body according to a fourth embodiment of the present invention;

Figure 6B is a sectional view taken along line I-I of Figure 6A;

Figure 7A is a schematic perspective view illustrating a machine tool employing a dynamic vibration absorber of a rotating body according to a fifth embodiment of the present invention;

Figure 7B is a plan view of the rotating body shown in Figure 7A;

Figure 8 is a schematic sectional view illustrating a hard disk drive employing a dynamic vibration absorber of a rotating body according to a preferred embodiment of the present invention;

Figure 9 is a schematic plan view of the spacer shown in Figure 8;

Figure 10A is a sectional view illustrating another embodiment of the clamper shown in Figure 8; and

Figure 10B is a plan view of the clamper of Figure 10A.

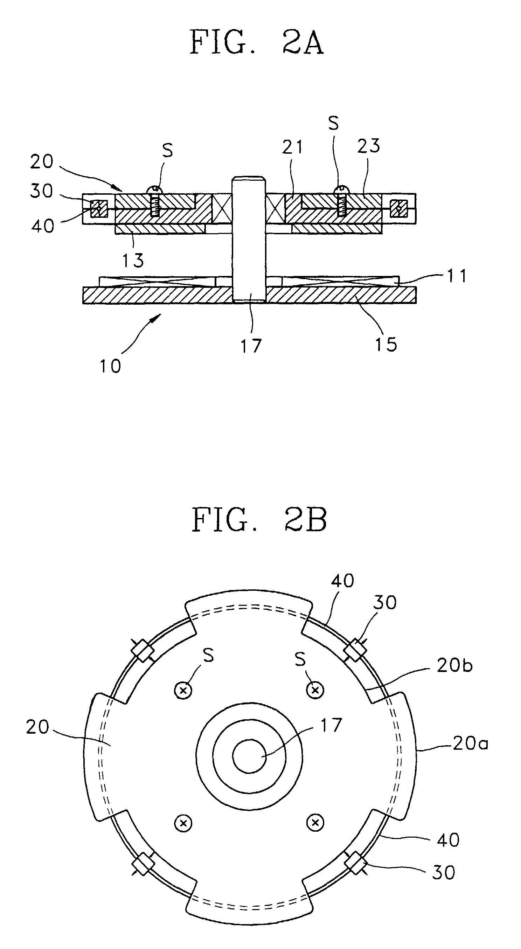

A dynamic vibration absorber of a rotating body according to a first embodiment of the present invention shown Figures 2A and 2B is intended to dampen vibrations generated when a motor 10 operated by the mutual electromagnetic force between a coil 11 and a magnet 13 is driven.

Referring to Figures 2A and 2B, the dynamic vibration absorber comprises a rotating body 20 rotatably installed on the shaft 17 supported by a stator 15 on which a coil 11 is installed, a plurality of mass bodies 30 disposed around the rotating body 20, and a connecting means for connecting the mass bodies 30 to the rotating body 20 so that the mass bodies 30 can elastically move in directions corresponding to the rotating body 20.

The rotating body 20 includes a main body 21 to which the magnet 13 is attached and which is rotatably supported on the shaft 17, and a cover 23 joined to the main body 21. The main body 21 and the cover 23 are joined by fixing means such as screws S or an adhesive. In addition, the rotating body 20 has a plurality of recessed portions 20b formed to be recessed with respect to the outer circumferential surface 20a of the rotating body 20 so that the mass bodies 30 can be disposed in the recessed portions 20b, respectively

The mass bodies 30 are disposed to be symmetrical with respect to the rotation axis of the rotating body 20, and positioned in the recessed portions 20b, respectively, so as to maintain the same intervals in a circumferential direction of the rotating body 20. In addition, each of the mass bodies 30 consists of a pair of metal pieces so as to symmetrically join an elastic ring which will be described below.

The connecting means comprises an elastic ring 40 interposed between the main body 21 and the cover 23 so as to be elastically deformable in the recessed portions 20b, and supports the mass bodies 30.

Now the operation of a dynamic vibration absorber of a rotating body according to a first embodiment of the present invention will be described with reference to Figures 2A and 2B.

When the rotating body 20 rotates together with the magnet 13 which is operated by the mutual electromagnetic force with the coil 11, the mass bodies 30 move to individual displacements in radial directions of the rotating body 20 independently of each other according to the elastic deformation of the elastic ring 40 positioned in the recessed portions 20b. The movements of the mass bodies 30 compensate for the eccentric mass of the rotating body 20, and absorb the rotational vibration of the rotating body 20. Therefore, the rotating body 20 can rotate in a stable state while having a constant axis of rotation without trembling to any sides. In particular, such a dynamic vibration absorber can be utilized in a rotating body requiring precision and stability of rotation.

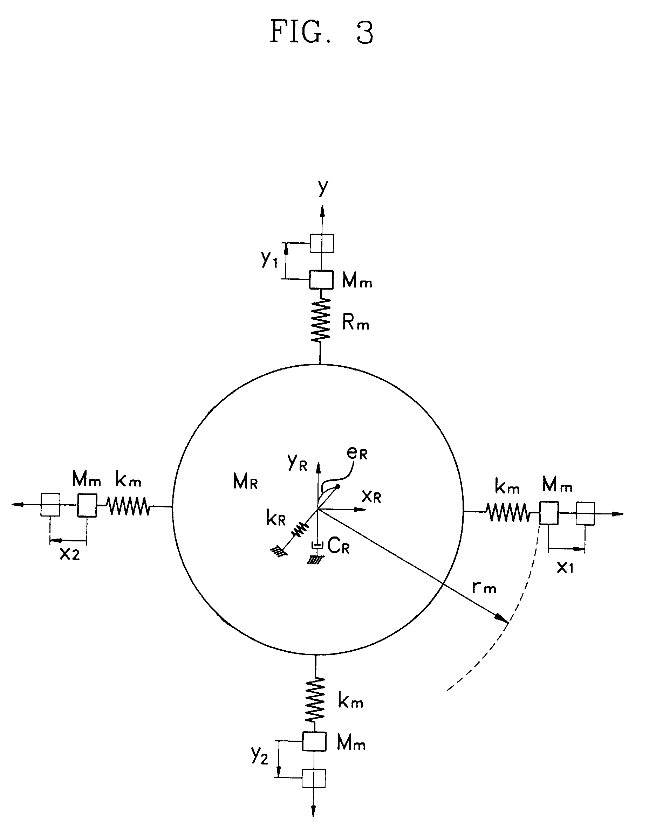

Figure 3 shows a schematic diagram illustrating a dynamical system of two degrees of freedom for theoretically describing the operation of the dynamic vibration absorber of a rotating body according to the first embodiment of the present invention. Equations of motion of the rotating body 20 and the mass bodies 30 in the x-axis direction are expressed by Equations (1) with reference to the two degrees of freedom system of Figure 3.

$$M_R \frac{d^2}{dt^2}(x_R + e_R \cos\omega t) = k_R x_R - c_R x'_R + k_m(x_1 - x_R) + c_m(x'_1 - x'_R) - k_m(x_2 + x_R) - c_m(x'_2 + x'_R)$$

$$M_m x''_1 = -k_m(x_1 - x_R) - c_m(x'_1 - x'_R)$$

$$M_m x''_2 = -k_m(x_2 + x_R) - c_m(x'_2 + x'_R)$$

where $M_R$ and $M_m$ are the masses of the rotating body and the mass bodies, respectively, $k_R$ and $k_m$ are spring constants, $c$ is a damping constant, $x_R$, $x_1$, and $x_2$ are displacements of the rotating body and the mass bodies in the x-axis direction, respectively, and $M_R \frac{d^2}{dt^2}(x_R + e_R \cos\omega t)$, $M_m x''_1$ and $M_m x''_2$ are inertial forces of the rotating body and the mass bodies, respectively. In addition, equations of motion of the rotating body 20 and the mass bodies 30 in the y-axis direction are similarly expressed by Equations (1).

On the other hand, when we let $r_R = A_R e^{i\omega t}$, $r_1 = A_1 e^{i\omega t}$, and $r_2 = A_2 e^{i\omega t}$ after Equations (1) are converted into the forms of complex numbers by letting $r_R = x_R + iy_R$ ($r_1 = x_1 + iy_1$, $r_2 = x_2 + iy_2$), Equations (1) become the following Equation (2) in matrix form.

$$\begin{bmatrix} -\omega^2 M_R + k_R + i\omega c_R + 2k_m + 2i\omega c_m & -k_m - i\omega c_m & k_m + i\omega c_m \\ -k_m - i\omega c_m & -\omega^2 M_m + k_m + i\omega c_m & 0 \\ k_m + i\omega c_m & 0 & -\omega^2 M_m + k_m + i\omega c_m \end{bmatrix}$$

$$\begin{bmatrix} A_R \\ A_1 \\ A_2 \end{bmatrix} = \begin{bmatrix} M_R e_R \omega^2 \\ 0 \\ 0 \end{bmatrix}$$

where $y_R$, $y_1$, and $y_2$ are displacements of the rotating body and the mass bodies in the y-axis direction, respectively, and $\omega$ is the rotational frequency of the rotating body.

On the other hand, after simplifying Equation (2) by letting the damping constant c = 0, we solve Equation (2) for the displacement of the rotating body 20 by letting $A_1 = \frac{k_m}{k_m - M_m \omega^2} A_R, A_2 = \frac{k_m}{k_m - M_m \omega^2} A_R$ as the following Equation (3)

$$[(k_R + 2k_m - M_R \omega^2)(k_m - M_m \omega^2) - 2k_m^2] A_R = M_R e_R \omega^2 (k_m - M_m \omega^2) \tag{3}$$

where $M_R e_R \omega^2$ is an external force (torque) applied to the rotating body, and $A_R$, $A_1$, and $A_2$ are displacements of the rotating body and the mass bodies, respectively.

On the other hand, since vibrations generated when the rotating body 20 rotates are displacements $A_R$ in the x-and y-axis directions, $A_R = 0$ must be satisfied when vibrations are not generated. Therefore, in order to satisfy $A_R = 0$ in Equation (3), the condition expressed in the following Equation (4) must be satisfied

$$k_m - M_m \omega^2 = 0$$

$$\therefore \omega = \sqrt{\frac{k_m}{M_m}} = \omega_m \tag{4}$$

where $\omega_m$ is the natural frequency of the mass bodies.

As can be seen in Equation (4), when the rotational frequency $\omega$ of the rotating body 20 is equal to the natural frequency $\omega_m$, of the mass bodies 30, theoretically the rotating body 20 does not move in the x- and y-axis directions, and consequently vibrations of the rotating body 20 do not occur.

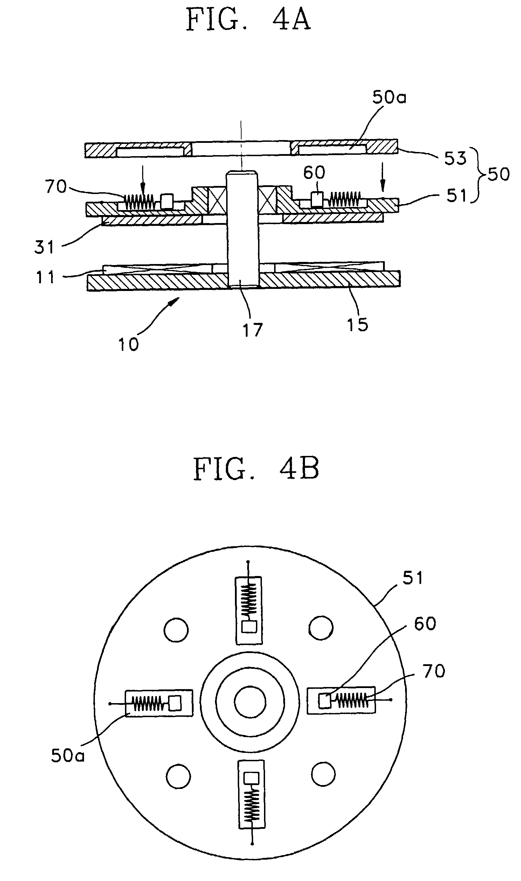

Figures 4A and 4B are diagrams of a dynamic vibration absorber of a rotating body according to a second embodiment of the present invention. The same reference numerals denote similar members having similar functions to those of Figure 3A.

Referring to Figures 4A and 4B, a dynamic vibration absorber comprises a rotating body 50 rotatably installed on a shaft 17, a plurality of mass bodies 60 disposed around the rotating body 50, and a connecting means for connecting the mass bodies 60 to the rotating body 50.

The rotating body 50 includes a main body 51 rotatably supported on the shaft 17, and a cover 53 joined to the main body 51. A plurality of receiving portions 50a are formed between the main body 51 and the cover 53 so that the mass bodies 60 can move in the receiving portions 50a in the radial directions of the rotating body 50. The mass bodies 60 are disposed to be symmetrical with respect to the rotation axis of the rotating body 50, and positioned within the individual receiving portions 50a at regular intervals in the circumferential direction of the rotating body 50.

The connecting means includes springs 70 installed to be elastically deformable within the receiving portions 50a, respectively. One end of each spring 70 is connected to its mass body 60, and the other end is interposed and fixed between the main body 51 and the cover 53.

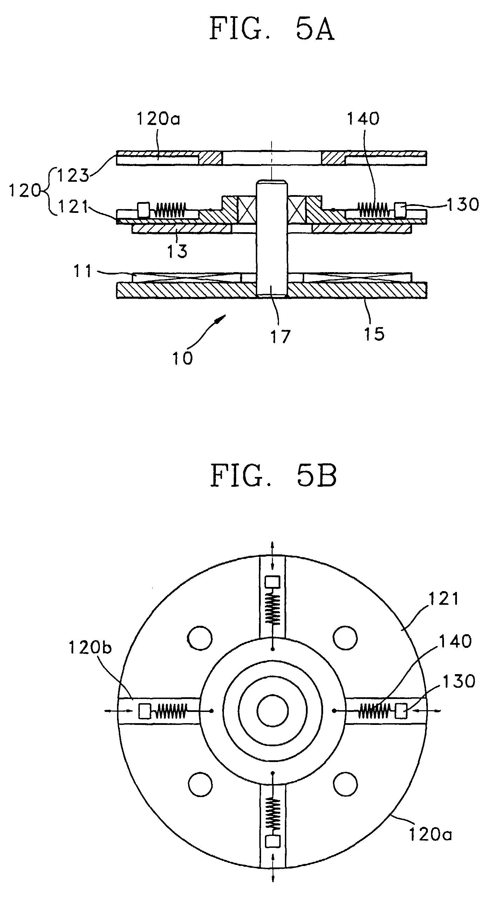

Figures 5A and 5B are diagrams of a dynamic vibration absorber of a rotating body according to a third embodiment of the present invention. The same reference numerals denote similar members having similar functions to those of Figure 4A.

Referring to Figures 5A and 5B, a dynamic vibration absorber includes a rotating body 120 rotatably installed on a shaft 17, a plurality of mass bodies 130 installed in receiving portions 120b provided in the rotating body 120, and springs 140 installed in the receiving portions 120b to be elastically deformable.

The receiving portions 120b are formed between a main body 121 and a cover 123 of the rotating body 120, and open through the outer circumferential surface 120a of the rotating body 120.

Each spring 140 is a connecting means for connecting each mass body 130 to the rotating body 120, and one end of the spring 140 is connected to the mass body 130 and the other end is interposed and fixed between the main body 121 and the cover 123.

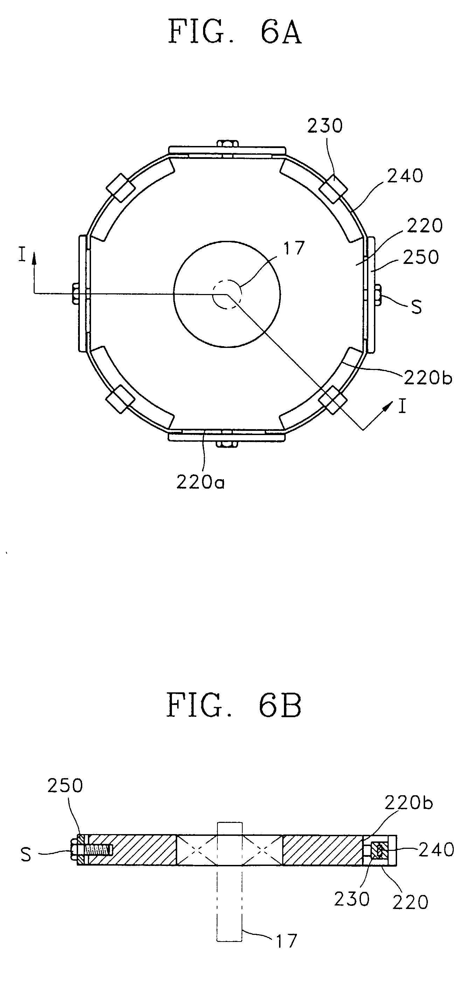

Figures 6A and 6B are schematic diagrams of a dynamic vibration absorber of a rotating body according to a fourth embodiment of the present invention.

Referring to Figures 6A and 6B, a dynamic vibration absorber includes a rotating body 220 rotatably installed on a shaft 17 and provided with a plurality of recessed portions 220b, a plurality of mass bodies 230 disposed at the outer circumferential surfaces 220a of the rotating body 220, and a connecting means for connecting the mass bodies 230 with the rotating body 220.

The connecting means includes a plurality of beams 240 on which the mass bodies 230 disposed in the corresponding recessed portions 220b are symmetrically joined, and fixing members 250 for fixing the ends of the beams 240 to the outer circumferential surfaces 220a of the rotating body 220. The length, thickness, and height of the beams 240 are designed in consideration of the rotation speed of the rotating body 220 and the mass of the mass bodies 230. The fixing member 250 is attached to the outer circumferential surface 220a of the rotating body 220 by a screw S.

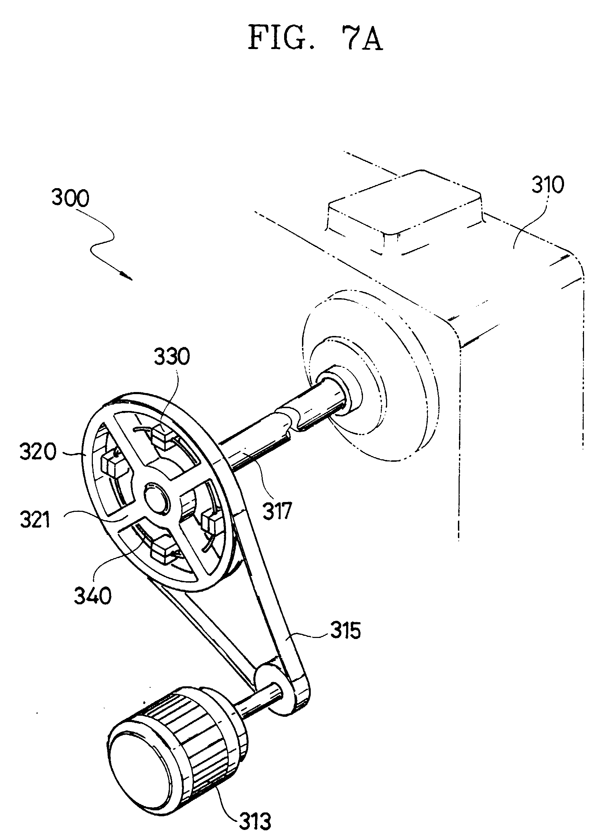

Figure 7A is a perspective view schematically illustrating a machine tool 300 employing a dynamic vibration absorber of a rotating body according to a fifth embodiment of the present invention.

The machine tool 300 shown in Figure 7A includes a driven portion 310 provided with a shaft 317, a driving source 313 for supplying power to the driven portion 310, a power transmitting belt 315 installed to run over a rotating body 320 such as a pulley for transmitting the power of the driving source 313 to the shaft 317.

The dynamic vibration absorber includes a plurality of mass bodies 330 disposed around the rotating body 320 over which the power transmitting belt 315 is installed and which rotates together with the shaft 317, and a connecting means for connecting the mass bodies 330 to the rotating body 320 so that the mass bodies 330 can elastically move in the radial directions of the rotating body 320.

The mass bodies 330 are disposed to be symmetrical with respect to the rotation axis of the rotating body 320, and positioned between radial ribs 321 so that the mass bodies 330 can be maintained at regular intervals in the circumferential direction of the rotating body. In addition, the mass body 330 has a configuration in which a pair of pieces are symmetrically assembled.

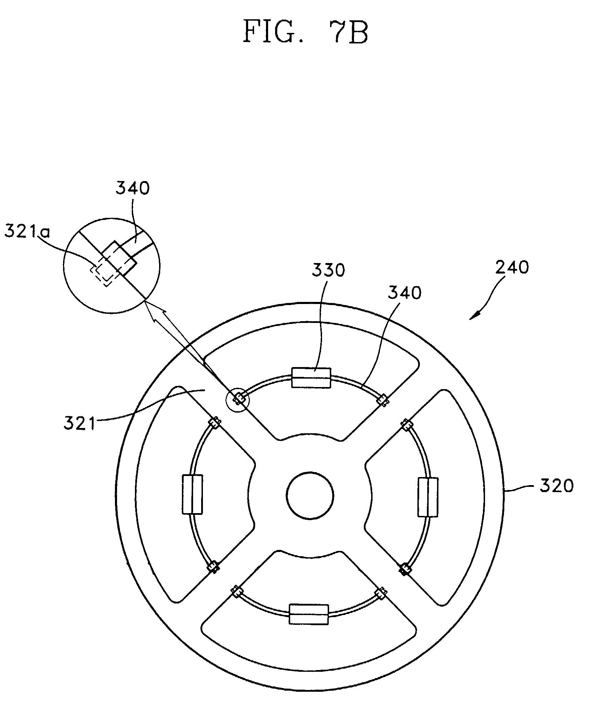

Referring to Figure 7B, the connecting means comprises locking holes 321a formed at the sides of the ribs 321, and elastic pins 340 which are joined to the corresponding locking holes 321a to be elastically deformable and around which corresponding mass bodies 330 are assembled. In addition, it is preferable that the mass body 330 is assembled to the middle portion of the elastic pin 340.

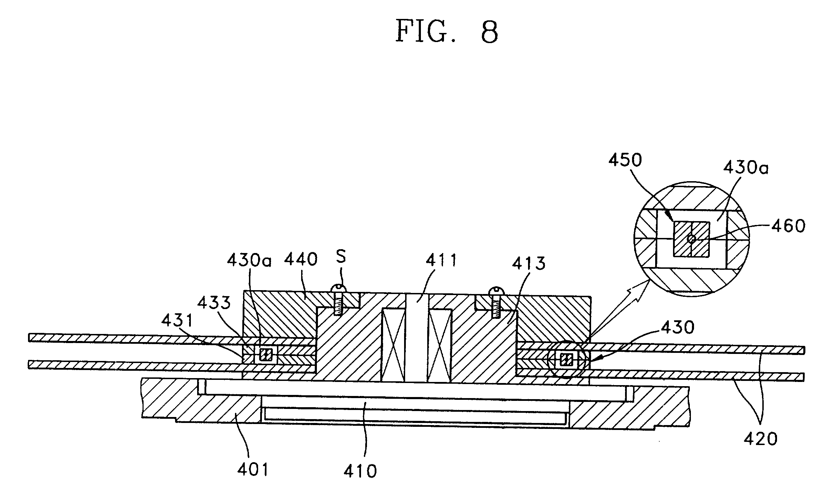

Figure 8 is a schematic sectional view illustrating a hard disk drive employing a dynamic vibration absorber of a rotating body according to a preferred embodiment of the present invention.

Referring to Figure 8, a hard disk drive comprises a spindle motor 410 installed on a base 401, a plurality of hard disks 420 supported on a rotor 413 which is rotatably installed on the rotating shaft 411 of the spindle motor 410, a spacer 430 interposed between the hard disks 420 and comprising a main body 431 and a cover 433 assembled to the main body 431, a clamper 440 fixed to the rotor 413 by screws S so as to clamp the hard disks 420, and a dynamic vibration absorber for absorbing vibrations generated when the hard disks 420 rotate.

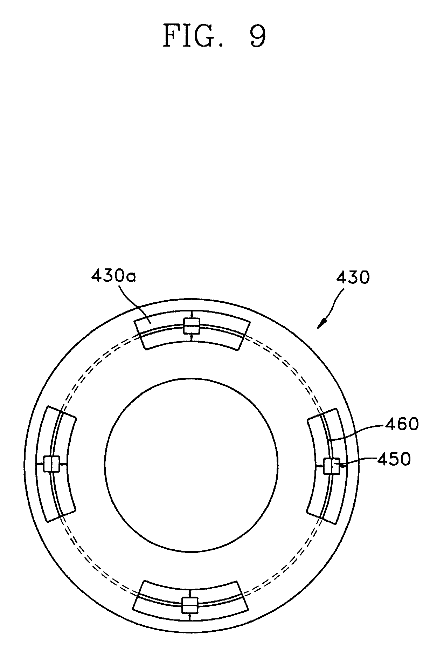

As shown in Figure 9, the dynamic vibration absorber includes mass bodies 450 which are installed in corresponding receiving holes 430a formed through the spacer 430 so as to be elastically movable by an elastic member 460 in radial directions of the spacer 430.

The mass bodies 450 are disposed to be symmetrical with respect to the rotation axis of the spacer 430, and positioned in the corresponding receiving holes 430a formed at regular intervals in the circumferential direction of the spacer 430.

The receiving holes 430a are formed through the main body 431 and the cover 433. The elastic member is an elastic ring 460 interposed between the main body 431 and the cover 433, and functions as a connecting means for connecting the mass bodies 450 to the spacer 430.

The operation of the dynamic vibration absorber of a hard disk drive structured as above will be described as follows.

When the hard disks 420 are rotated so as to record information on the hard disks 420 or reproduce the recorded information, the hard disks 420, rotor 413, spacer 430, and clamper 440 are rotated together. At this time, the mass bodies 450 in the spacer 430 move to individual displacements in radial directions of the spacer 430 independently of each other by the medium of the elastic ring 460. Such movements of the mass bodies 450 compensate for the eccentric masses of not only the spacer 430 but also the above parts rotating together therewith. Therefore, the hard disks 420 can be maintained in a stable rotation state without trembling in radial directions, and the reliability in recording/reproducing information can be enhanced.

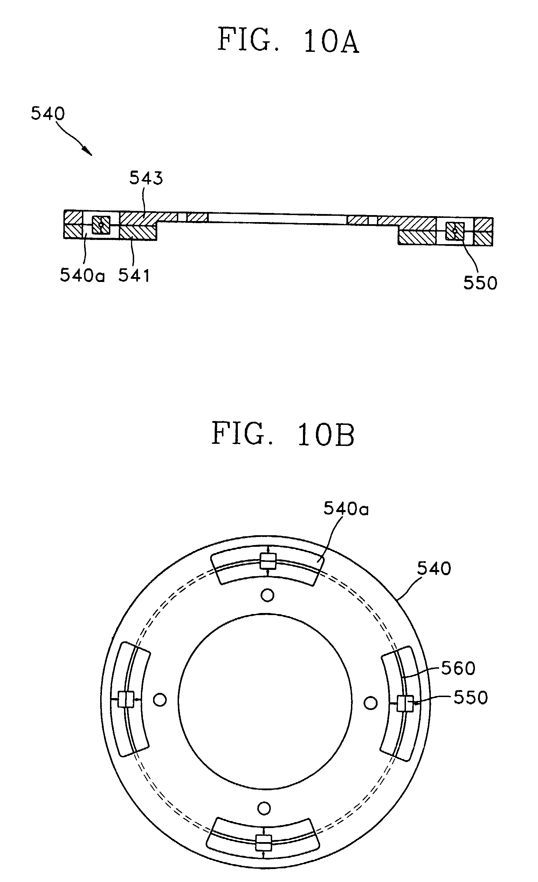

Figures 10A and 10B are diagrams illustrating main portions of a hard disk drive employing a dynamic vibration absorber according to another embodiment of the present invention. Since a dynamic vibration absorber is installed in a clamper 540, this embodiment is different from the embodiment shown in Figure 8 in which a dynamic vibration absorber is installed in a spacer.

Referring to Figures 10A and 10B, the clamper 540 includes a main body 541, and a cover 543 assembled to the main body 541.

The dynamic vibration absorber includes a plurality of mass bodies 550 provided at the peripheral portions of the clamper 540, and a connecting means for connecting the mass bodies 550 to the clamper 540 so that the mass bodies 550 can elastically move in the radial directions of the clamper 540.

The mass bodies 550 are disposed to be symmetrical with respect to the rotation axis of the clamper 540, and positioned, respectively, in a plurality of receiving holes 540a formed through a main body 541 and a cover 543 at regular intervals in the circumferential direction of the clamper 540. In addition, the mass body 550 has a configuration in which a pair of pieces are symmetrically assembled.

The connecting means includes an elastic ring 560 installed in the receiving holes 540a to be elastically deformable. The elastic ring 560 are interposed between the main body 541 and the cover 543, and supports the mass bodies 550 positioned in the respective receiving holes 540a.

As described above, a dynamic vibration of a rotating body according to the present invention can effectively absorb the rotational vibrations of the rotating body by the displacements of mass bodies connected to the rotating body to be elastically movable without being related to irregular mass distribution of the rotating body.

In addition, since a dynamic vibration absorber according to the present invention can absorb the rotational vibrations without being limited by the rotation speed of the rotating body, the dynamic vibration absorber can be applied to a rotating body such as in a machine tool or a hard disk drive.

Although particular embodiments of the invention have been described with reference to the accompanying drawings for the purposes of illustration, it should be understood that various modifications and equivalents may be made by those skilled in the art without departing from the spirit and scope of the invention.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

**Claims**

1. A dynamic vibration absorber of a rotating body (20;50;120;220;320;430;540) for absorbing vibrations generated when the rotating body (20;50;120;220;320;430;540) rotates,
   characterized in that the dynamic vibration absorber includes:

   a rotating body (20;50;120;220;320;430;540);

   at least one mass body (30;60;130;230;330;450;550) disposed at peripheral part of the rotating body(20;50; 120;220;320;430;540); and

   a connecting means (40;70;140;240;340;460;560) for connecting the mass body (30;60;130;230;330;450; 550) to the rotating body (20;50;120;220;320;430;540) so that the mass body (30;60;130;230;330;450;550) can elastically move in a radial direction of the rotating body (20;50;120;220;320;430;540).

2. The dynamic vibration absorber of a rotating body as claimed in claim 1, wherein the rotating body (20;220) includes at least one recessed portion (20b;220b) formed to be recessed with respect to the circumferential surface of the rotating body (20;220) so that the mass body (30;230) can be received therein; and the connecting means includes an elastic member installed in the recessed portion (20b;220b) so as to support the mass body (30;230) received in the recessed portion (20b;220b).

3. The dynamic vibration absorber of a rotating body as claimed in claim 2, wherein when a plurality of mass bodies (30;230) are employed, the mass bodies (30;230) are disposed to be symmetrical with respect to the rotation axis of the rotating body (20;220), and positioned in the corresponding recessed portions (20b;220b) at regular intervals in the circumferential direction.

4. The dynamic vibration absorber of a rotating body as claimed in claim 2 or 3, wherein the mass body (30;230) includes a pair of pieces symmetrically assembled to the elastic member.

5. The dynamic vibration absorber of a rotating body as claimed in claim 1, wherein the rotating body (20;540) includes a main body (21;541), a cover (23;543) assembled to the main body(21;541), and at least one recessed portion (20b;540a) formed to be recessed with respect to the circumferential surfaces of the main body (21;541) and the cover (23;543) to receive the mass body (30;550); and

   the connecting means (40;560) includes an elastic ring interposed between the main body (21;541) and the cover (23;543) and supporting the mass body (30;550) so that the mass body (30;550) can elastically move in the recessed portion (20b;540a).

6. The dynamic vibration absorber of a rotating body as claimed in claim 1, wherein the rotating body (50;120) includes a main body (51;121), a cover (53;123) assembled to the main body (51;121), and at least one receiving portion (50a;120b) formed between the main body (51;121) and the cover (53;123) so that the mass body (60;130) can be movably received in the receiving portion (50a;120b); and

   the connecting means (70;140) includes a spring supporting the mass body (60;130) so that the mass body (60;130) can elastically move in the receiving portion (50a;120b).

7. The dynamic vibration absorber of a rotating body as claimed in claim 6, wherein the receiving portion (120b) is opened through the circumferential surface of the rotating body (120) so the mass body (130) can move in a radial direction of the rotating body (120).

8. The dynamic vibration absorber of a rotating body as claimed in claim 1, wherein the rotating body (220) includes at least one recessed portion (220b) formed to be recessed with respect to an outer side of the rotating body (220) to receive the mass body (230); and

   the connecting means (240) includes a beam whose ends are fixed to outer sides of the rotating body (220) and which is elastically deformable and supports the mass body (230).

9. The dynamic vibration absorber of a rotating body as claimed in claim 8, wherein the connecting means further includes a fixing means (250) for fixing the beam (240) to outer sides of the rotating body (220).

10. The dynamic vibration absorber of a rotating body as claimed in claim 1, wherein the connecting means (340) includes locking holes (321a) formed at ribs (321) radially installed in the rotating body (320); and

    elastic pins fixed to the locking holes (321a) so as to elastically support the mass body (330).

11. A hard disk drive including: a base (401); a spindle motor (410) installed on the base (401); a plurality of hard disks (420) supported on a rotor (413) rotatably installed on the shaft (411) of the spindle motor (410); spacers (430) interposed between the hard disks (420); and a clamper (440;540) assembled to the rotor (413) so as to clamp the hard disks (420),

    characterized in that the hard disk drive includes:

    a dynamic vibration absorber for absorbing rotational vibrations generated when the hard disks (420) rotate while elastically moving in a radial direction of the hard disks (420).

12. The hard disk drive as claimed in claim 11, wherein the dynamic vibration absorber is a dynamic vibration absorber according to any of claims 1 to 10.

13. The hard disk drive of claim 11 or 12, wherein the dynamic vibration absorber includes:

    at least one mass body (450;550) installed in the spacer (430) and/or the clamper(440;540); and

a connecting means (460; 560) for connecting the mass body (450;550) to the spacer (430) and/or the clamper (440; 540) so that the mass body (450; 550) can elastically move in a radial direction of the spacer (430) and/ or the clamper (4440;540).

14. The hard disk drive as claimed in any of claims 11 to 13, wherein the spacer (430) and/or the clamper (440; 540) includes at least one recessed portion (430a;540a) formed to be recessed with respect to an outer side of the clamper (440;540) and/or spacer (430) to receive the mass body (450;550); and
the connecting means (460;560) includes an elastic member installed in the recessed portion (430a;540a) so as to elastically support the mass body (450;550).

15. The hard disk drive as claimed in claim 14, wherein the spacer (430) and/or the clamper (440;540) includes a main body (431;541) and a cover (433;543) assembled to the main body (431;541); and
the elastic member is an annular elastic ring (460;560) interposed between the main body (431;541) and the cover (433;543).

16. The hard disk drive as claimed in claim 12, 13, 14 or 15, wherein the spacer (430) and/or the clamper (440;540) includes at least one receiving hole (430a;540a) in which the mass body (440;550) is movably received; and
the connecting means (460;560) includes an elastic member installed in the receiving hole (430a;540a) so as to elastically support the mass body (450;550).

17. The hard disk drive as claimed in any of claims 12 to 16, wherein the spacer (430) and/or the clamper (440;540) includes a main body(431;541), a cover (433;533) assembled to the main body(431;531), and at least one receiving hole (430a;530a) formed through the main body (431;531) and the cover (433;543) for receiving the mass body (440;540); and
the connecting means (460;560) includes an annular elastic ring interposed between the main body (431; 531) and the cover (433;533) so as to elastically support the mass body (440;540)

# FIG. 1 (PRIOR ART)

# FIG. 2A

# FIG. 2B

# FIG. 3

# FIG. 4A

# FIG. 4B

# FIG. 5A

# FIG. 5B

# FIG. 6A

230
240
220
250
17
S
220b
I
I
220a

# FIG. 6B

250
220b
S
240
230
220
17

# FIG. 7A

FIG. 7B

# FIG. 8

EP 0 999 546 A1

FIG. 9

# FIG. 10A

540

543

540a 541

550

# FIG. 10B

540a

540

560

550

**European Patent Office**

## EUROPEAN SEARCH REPORT

Application Number

EP 99 30 7870

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 1998, no. 14, 31 December 1998 (1998-12-31) & JP 10 247359 A (HITACHI LTD), 14 September 1998 (1998-09-14) * abstract * | 1,11,12 | G11B19/20 G11B17/028 |
| P,X | EP 0 938 087 A (THOMSON BRANDT GMBH) 25 August 1999 (1999-08-25) * column 12, line 11 - column 12, line 32 * * column 16, line 5 - column 19, line 10 * * claims 1,4,6,8; figures 4,8-11 * | 1 | |
| A | EP 0 836 185 A (SAMSUNG ELECTRONICS CO LTD) 15 April 1998 (1998-04-15) * the whole document * | 1,11 | |

TECHNICAL FIELDS SEARCHED (Int.Cl.7)

G11B

The present search report has been drawn up for all claims

| Place of search | Date of completion of the search | Examiner |
|---|---|---|
| THE HAGUE | 26 November 1999 | Benfield, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 99 30 7870

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-1999

| Patent document cited in search report | | Publication date | Patent family member(s) | | Publication date |
|---|---|---|---|---|---|
| JP 10247359 | A | 14-09-1998 | NONE | | |
| EP 0938087 | A | 25-08-1999 | DE | 19806898 A | 26-08-1999 |
| EP 0836185 | A | 15-04-1998 | JP | 10124990 A | 15-05-1998 |